# EUROPÄISCHE PATENTSCHRIFT

(11) **EP 0 839 832 B1**
(45) Veröffentlichungstag und Bekanntmachung des Hinweises auf die Patenterteilung: **17.06.2009**
(21) Anmeldenummer: 98100770.1
(22) Anmeldetag: 14.12.1993
(51) Int. Cl.: C08F 2/30, C09D 7/00, C08G 18/48, C08G 18/66

(54) **Verwendung eines hydrophilen Polyurethans in wässrigen Systemen**
Use of a hydrophilic polyurethane in aqueous systems
Utilisation d'un polyuréthane hydrophile dans des systèmes aqueux

(30) Priorität: 17.12.1992 DE 4242687
(43) Veröffentlichungstag der Anmeldung: 06.05.1998
(62) Teilanmeldung aus: 94903768.3
(73) Patentinhaber: Henkel AG & Co. KGaA, 40589 Düsseldorf (DE)
(72) Erfinder: Fischer, Herbert, Dr. Dipl.-Chem., 40229 Düsseldorf (DE); Emmerling, Winfried, Dr. Dipl.-Chem., 25436 Tornesch (DE); Möller, Thomas, Dr. Dipl.-Chem., 40593 Düsseldorf (DE); Onusseit, Hermann, Dr. Dipl.-Ing., 42781 Haan (DE); Haller, Werner, Dr. Dipl.-Chem., 40699 Erkrath (DE); Schöttmer, Bernhard, Dr. Dipl.-Chem., 40789 Monheim (DE); Helfterkamp, Bernhard, Dipl.-Chem.-Ing., 46236 Bottrop (DE); Feustel, Dieter, Dr. Dipl.-Chem., 40789 Monheim (DE); Friedrich, Klaus, Dr. Dipl.-Chem., 32457 Porta Westfalica (DE); Büsching, Hartmut, 31604 Raddestorf (DE); Hübner, Norbert, Dr. Dipl.-Chem., 40597 Düsseldorf (DE)

(56) Entgegenhaltungen:
- EP-A- 0 334 032
- US-A- 4 496 708

## Beschreibung

Die Erfindung betrifft hydrophile hochmolekulare nichtionische Polyurethane, ihre Herstellung und ihre Verwendung als Verdickungsmittel und als Stabilisator bei der Emulsionspolymerisation.

Hydrophile Polyurethane gewinnen in Form einer wäßrigen Dispersion zunenmend an Bedeutung. Die Dispersionen können durch Zusatz von Emulgatoren oder durch den Einbau von hydrophilen Gruppen stabilisiert sein. Als hydrophile Gruppe sind ionische Gruppen, insbesondere Salze von Carbonsäuren und Alkalimetallen bzw. Aminen üblich. Es sind aber auch wäßrige Dispersionen von Polyurethanen mit einem nichtionischen inneren Emulgator bekannt.

So wird in der EP 0 497 404 A eine wäßrige Polyurethan-Dispersion auf der Basis von Tetramethylxylol-Diisocyanat beschrieben. Das Polyurethan enthält als inneren Emulgator ein Reaktionsprodukt von Alkoxypolyethylenglykol mit einem Anhydrid, welches dann noch weiter umgesetzt wird mit einem Alkylenoxid, einem Epoxyalkohol oder einem Diglycidylether. Im Beispiel 4 werden a) 133 Gew.-Teile eines Reaktionsproduktes von Methoxypolyethylenglykol und Trimellithsäureanhydrid, das schließlich noch mit Propylenoxid umgesetzt wurde, b) 79 Gew.-Teile Polypropylenglykol, c) 40 Gew.-Teile des Ethylenglykoldiethers von Bisphenol A und d) 146 Gew.-Teile an Isophorondiisocyanat gemischt und 3 Stunden bei 90°C gehalten. Dann erfolgt bei 45 bis 90°C eine Kettenverlängerung mit Wasser. Es wurde eine Dispersion mit Partikeln von 50 nm und mit einer guten Wasserbeständigkeit erhalten. Die Dispersion kann zur Herstellung von Klebstoffen und von Farben verwendet werden.
Nachteilig bei derartigen wäßrigen Polyurethan-Dispersionen ist, daß ihre Viskosität auch bei hohen Feststoffkonzentrationen für viele Einsatzgebiete zu niedrig ist, z.B. zum Verkleben von Tapeten. Außerdem ist die Klebkraft und der Tack der entsprechend stark verdünnten Produkte viel zu gering bzw. nicht vorhanden.

K.C. Frisch untersuchte den thermischen und hydrolytischen Abbau von linearen Polyurethanen (Journal of Polymer Science, Vol. 11 (1973) S. 637-648 und S. 1683-1690). Die Polyurethane wurden aus den Diisocyanaten 2,4- und 2,6-Diisocyanato-toluol (TDI), m- und p-Diisocyanato-xylol (XDI) und 4,4-Diisocyanato-dicyclohexylmethan (HMDI) sowie aus Polyoxyethylenglykol mit dem Äquivalentgewicht 190, 1 485 und 2 955 hergestellt. Teilweise wurde auch noch Ethylenglykol als Kettenverlängerer eingesetzt. Aus diesen Bausteinen wurden Polyurethane in Gegenwart von Zinn-octoat als Katalysator bei etwa 70°C in Lösungsmitteln hergestellt. Die Hydrolyse wurde anhand einer Lösung von 0,75 g in 25 ml Lösungsmittel mit 10 Vol-% an Isopropanol untersucht. Zur weiteren Verwendung der hergestellten Polyurethane wurde nichts gesagt.

In der US 4 079 028 wird ein niedermolekulares Polyurethan als Verdicker für einen Latex und andere wäßrige Systeme beschrieben. Das Polyurethan enthält mindestens 3 hydrophobe Gruppen mit hydrophilen Polyoxyalkylengruppen dazwischen. So kann ein Polyurethan mit einem durchschnittlichen Molekulargewicht (Mw) von 71 000 und mit Dodecyl-Endgruppen hergestellt werden, z.B. aus 200 g Polyethylenglykol, 1,7 g Dodecylisocyanat und 1,4 g TDI in Toluol bei 75°C in Gegenwart von Dibutylzinnlaurat. Das Molekulargewicht liegt im Bereich von 10 000 bis 200 000. Bei den linearen Polyurethanen (s. Beispiele 1 bis 102) beträgt der Polymerisationsgrad meistens 1 bis 4, maximal 18. Die Tabelle 19 enthält als klare Abgrenzung gegenüber den bekannten linearen Verdickern aus den beiden Komponenten Diol und Monoisocyanat einerseits und Monoalkohol und Diisocyanat andererseits die Reaktionsprodukte aus den drei Komponenten Diol, Diisocyanat und einer monofunktionellen Verbindung wie Monoisocyanat oder einwertige Alkohole oder Amine. Polyethylenglykol, Diisocyanate und gegebenenfalls weitere Polyole werden nicht erwähnt. Die bekannten linearen Polyurethane werden als Verdicker eingesetzt, z.B. auch von Klebstoff-Dispersionen. Nicht erwähnt wird die Verwendung als Klebstoff.

Ähnliches gilt für die US 4,155,892.

In der EP 0 537 900 werden derartige Polyurethane als Verdicker für nichtwäßrige Systeme beschrieben.

Auch in der DE 41 37 247 wird ein Verdicker aus einem linearen Polyurethan beschrieben. Es wird ebenfalls aus einem difunktionellen Isocyanat, einem Polyetherdiol und einem monofunktionellen Alkohol hergestellt.

US 4 496 708 beschreibt wasserlösliche Polyurethane mit einem hydrophilen Polyether-Rückgrad und hieran hängenden einwertigen hydrophoben Gruppen ausreichender Größe und Anzahl, um eine passende Balance hydrophil/lipophil zu ergeben. Dabei ist das Rückgrad aufgebaut aus Resten organischer Polyisocyanate, Resten eines Polyethylenglykolhomopolymer oder Copolymer mit bis zu 50 Mol-% C₃ bis C₅ Polyoxyalkylen, oder das Monomere Reaktanden, der eine monovalente hydrophobe Gruppe aufweist, die einen molaren Volumenbeitrag von mindestens etwas 130 cm³/Mol liefert. Diese Polymere haben eine kammförmige Struktur.

EP 334 032 A1 beschreibt ein Verfahren zur Herstellung von wässrigen Dispersionen von Polymerisaten durch Polymerisation von olefinsch ungesättigten Monomeren im wässrigen Medium unter Verwendung von Urethangruppen aufweisenden Emulgatoren eines unter 30.000 liegenden Molekulargewichts, die einen die Löslichkeit oder Dispergierbarkeit in Wasser gewährleistenden Gehalt an chemisch eingebauten hydrophilen Zentren aufweisen, die ausschließlich oder überwiegend endständig angeordnet sind, wobei diese Emulgatoren eine verzweigte Molekülstruktur aufweisen, die nach diesem Verfahren erhältliche Dispersionen und ihre Verwendung zur Herstellung von Beschichtungen auf beliebigen Substraten.

Daraus ergibt sich als erfindungsgemäße Aufgabe, ein wäßriges System von Polyurethanen bereitzustellen, das bereits bei niedriger Konzentration eine hohe Viskosität hat, das mit Kleistern auch preislich konkurrieren kann und das in jedem Verhältnis mit Wasser mischbar ist.

Die erfindungsgemäße Lösung ist den Patentansprüchen zu entnehmen. Die Erfindung beruht im wesentlichen auf der Bereitstellung eines hydrophilen hochmolekularen nichtionischen Polyurethans, das in Wasser löslich ist und dessen Viskosität in Wasser durch hydrophobe Wechselwirkungen zusätzlich erhöht wird.

Unter "wasserlöslich" und "hochmolekular" wird die Eigenschaft des Polyurethans verstanden, mit Wasser bei 20 °C eine homogene Mischung zu ergeben, die eine beträchtlich höhere Viskosität als das reine Wasser hat. So beträgt die spezifische Viskosität einer 1 %igen Lösung mindestens 0,4, insbesondere mindestens 0,5, vorzugsweise mindestens 0,7, gemessen bei 20°C mit einem Ostwald-Viskosimeter. Die Konzentrationsabhängigkeit der spezifischen Viskosität ist im üblichen Maß weitgehend linear. Das durchschnittliche Molekulargewicht Mn beträgt mindestens 10000, Vorzugsweise 20000 bis 200000 und besonders bevorzugt 40000 bis 180000 bestimmt nach GPC mit Polystyrol als Eichstandard.

Das hohe Molekulargewicht ergibt sich aus der hohen Viskosität: Die spezifische Viskosität kann bis zu 6,0 betragen, zumindest aber bis zu 4 (1 %ige Lösung bei 20°C mit einem Ostwald-Viskosimeter).

Für Polyurethane mit zusätzlichen hydrophoben Diolen ist die Schmelzviskosität nach Epprecht größer als 3, vorzugsweise größer als 5 und besonders größer als 10 Pas bei 175°C. Es können auch Produkte vorkommen, die bei 175°C schon praktisch fest sind.

3 bis 20 %ige Lösungen haben bei 22°C eine Viskosität von 20 mPa•s bis standfest (Brookfield, Spindel 7). Eine 2 %ige Lösung hat eine Viskosität von 20 bis 24 000 mPa•s (Brookfield, Spindel 7). Eine 40 %ige Lösung hat eine Viskosität von 700 mPa•s bis standfest, insbesondere von 4 000 bis standfest (Brookfield, Spindel 7).

Aus dem Viskositätsverhalten wird geschlossen, daß es sich um eine weitgehend echte Lösung mit molekularer Verteilung des PUs in dem Wasser handelt. Insbesondere ist das Polyurethan in jedem Verhältnis mit Wasser bei 20 °C mischbar. Es gibt also keine Mischungslücke. Zumindest ist eine wäßrige Lösung mit einem Polymergehalt bis zu 70 Gew.-% herstellbar, bezogen auf die Lösung. Die wäßrige Lösung ist überraschend stabil. Das gilt nicht nur in Abhängigkeit von der Zeit, sondern auch bei Zusatz von ionischen Verbindungen oder bei Zusatz von organischen Lösungsmitteln. So ist es möglich, bis zu 5 % Kochsalz zuzusetzen. Die wäßrige Lösung ist auch stabil bei Änderung des pH-Wertes. So ist es möglich, den pH-wert im Bereich von 2 bis 12 zu variieren.

Mit "nichtionisch" ist gemeint, daß das Polyurethan keine ionischen Gruppen als emulgierende Gruppen aufweist, also keine Carboxylat-, Sulfonat-, Phosphonat- oder Ammonium-Gruppen. Die Wasserlöslichkeit ergibt sich vielmehr aus den hydrophilen nichtionischen Gruppen des Polyethylenethers - [CH₂-CH₂-O-]ₙ -. Dabei ist n eine Zahl von 8 bis 500, insbesondere von 20 bis 300 und vor allem von 50 bis 200. Diese Struktureinheiten leiten sich insbesondere von den als Diolen eingesetzten Polyethylenglykolen ab. Unter Polyethylenglykol sind aber nicht nur Polyadditionsprodukte von Ethylenoxid an Wasser oder Ethylenglykol als Startmolekül zu verstehen, sondern auch Polyadditionen an andere zweiwertige Alkohole, z.B. Butandiol, Hexandiol, 4,4'-Dihydroxy-diphenylpropan. Es können auch mehrere Polyethylenglykole eingesetzt werden, die sich im durchschnittlichen Molekulargewicht unterscheiden. Es können auch Copolymere von Ethylenoxid z.B. mit Propylenoxid verwendet werden, sofern sie genügend wasserlöslich sind, d.h. mehr als 10 g in 100 g Wasser bei 20°C über 6 Monate gelöst bleiben.

Das Polyethylenglykol mass zu 2 bis 40, insbesondere bis zu 30 Gew.-% durch andere Diole ersetzt werden, die einen hydrophoben Rest mit einer Wasserlöslichkeit von höchstens 2 9/100 g Wasser enthalten. Bei dem hydrophoben Rest Y handelt es sich um aliphatische oder alicyclische Strukturen. Die Reste können auch aromatische Strukturen enthalten. Die Stellung der beiden OH-Gruppen kann eine gewisse Bedeutung haben, z.B. für die verdickenden Eigenschaften. Bevorzugt werden Diole mit mindestens einer primären OH-Gruppe, insbesondere 1,2- oder alpha, omega-Diole eingesetzt.

Ferner können 2 bis 40 % des Polyethylenglykols durch andere Ethergruppenhaltige hydrophobe Diole ersetzt werden mit Molgewichten von 250 bis 6 000, bevorzugt 650 bis 4 000, insbesondere von 1 000 bis 2 000. ausgewählt aus Polypropylenglykol (PPG), Polybutylenglykol, Polytetrahydrofuran, Polybutadiendiol Bevorzugte hydrophobe Diole sind Polypropylenglykol, Polytetrahydrofuran mit einem Molekulargewicht von 400 bis 000, insbesondere 1 000 bis 2 000 sowie 1,10-Decandiol, 1,12-Dodecandiol, oder 2-Buten-1,4-diol, 2-Butin-1,4-diol.

Vorzugsweise werden die hydrophoben Diole allein oder gemischt in einer Menge von 2 bis 30, insbesondere von 5 bis 25 Gew.-%, bezogen auf die insgesamt eingesetzten Diole verwendet.

Um ein hochmolekulares Polyurethan zu erhalten, ist selbstverständlich auf die Reinheit der Diole zu achten. So sollte der Gehalt an Alkali- und Erdalkalimetallionen unter 500 ppm, insbesondere unter 150 ppm und vorzugsweise unter 10 ppm liegen. Außerdem sollte der Wassergehalt unter 0,5, insbesondere unter 0,1, bevorzugt unter 0,05 Gew.-% nach K. Fischer liegen.

Die genannten Diole sind alle bekannt und zum größten Teil auch käuflich im normalen Chemikalienhandel zu erwerben.

Neben den Diolen sind die Diisocyanate wesentliche Bausteine des erfindungsgemäßen Polyurethans. Dabei handelt es sich um Verbindungen der allgemeinen Struktur O=C=N-X-N=C=O, wobei X ein aliphatischer, alicyclischer oder aromatischer Rest ist, vorzugsweise ein aliphatischer oder alicyclischer Rest mit 4 bis 18 C-Atomen.

Beispielsweise seien als geeignete Isocyanate genannt 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4diisocyanato-cyclohaxan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Diisocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanatoethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat. Schwefelhaltige Polyisocyanate erhält man beispielsweise durch Umsetzung von 2 mol Hexamethylen-diisocyanat mit 1 mol Thiodiglykol oder Dihydroxydihexylsulfid. Weitere wichtige Diisocyanate sind Trimethylhexemethylendiisocyanat, 1,4-Diisocyanatobutan, 1,12-Diisocyanatododecan und Dimerfettsäure-diisocyanat. Besonders geeignet sind: Tetramethylen-, Hexamethylen-, Undecan-, Dodecamethylen-, 2,2,4-Trimethylhexan-, 1,3-Cyclohexan-, 1,4-Cyclohexan-, 1,3-bzw. 1,4-Tetramethylxylol, Isophoron-, 4,4-Dicyclohexylmethan- und Lysinester-Diisocyanat. Ganz besonders bevorzugt ist das Tetramethylxy-loldiisocyanat, insbesondere das m-TMXDI von der Fa. Cyanamid.

Das Molverhältnis von Diol zu Diisocyanat sollte möglichst in der Nähe von 1 : 1 liegen, um ein hohes Molekulargewicht zu erzielen. Das Molverhältnis beträgt im allgemeinen 1 : 0,95 bis 1 : 1,25, vorzugsweise 1 : 0,95 bis 1 : 1,12 und ganz bevorzugt 1 : 0,98 bis 1 : 1,1.

Wenn auf ein besonders hohes Molekulargewicht Wert gelegt wird, sollte auf bekannte Weise eine Kettenverlängerung vorgenommen werden, indem zunächst Prepolymere mit überschüssigem Diisocyanat hergestellt werden, die dann anschließend mit kurzkettigen Diolen oder Diaminen oder mit Wasser verlängert werden. Als Kettenverlängerer seien konkret genannt:
- die üblichen gesättigten und ungesättigten Glykole, wie Ethylenglykol oder Kondensate des Ethylenglykols, Butandiol-1,3, Butandiol-1,4, Butendiol, Propandiol-1,2, Propandiol-1,3, Neopentylglykol, Hexandiol, Bis-hydroxymethylcyclohexan, Dioxyethoxyhydrochinon, Terephthalsäure-bis-glykolester, Bernsteinsäure-di-2-hydroxyethylamid, Bernsteinsäure-di-N-methyl-(2-hydroxy-ethyl)amid, 1,4-Di(2-hydroxy-methyl-mercapto)-2,3,5,6-tetrachlorbenzol, 2-Methylenpropandiol-(1,3), 2-Methylpropandiol-(1,3);
- aliphatische, cycloaliphatische und aromatische Diamine wie Ethylendiamin, Hexamethylendiamin, 1,4-Cydohexylendiamin, Piperazin, N-Methyl-propylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan oder die Isomeren des Phenylendiamins. Weiterhin auch Carbohydrazide oder Hydrazide von Dicarbonsäuren.
- Aminoalkohole wie Ethanolamin, Propanolamin, Butanolamin, N-Methyl-ethanolamin, N-Methyl-isopropanolamin; Diethonolamin, Triethanolamin sowie Di- oder Tri(Alkanolamine).
- aliphatische, cycloaliphatische, aromatische und heterocyclische Mono- und Diaminocarbonsäuren wie Glycin, 1-und 2-Alanin, 6-Aminocapronsäure, 4-Aminobuttersäure, die isomeren Mono- und Diaminobenzoesäuren, die isomeren Mono- und Diaminonaphthoesäuren,

Die erfindungsgemäßen Polyurethane können sowohl in einem einstufigen als auch in einem zweistufigen Verfahren hergestellt werden. In dem zweistufigen Verfahren wird zunächst ein Prepolymeres hergestellt, indem ein Teil der Polyole, z.B. die hydrophilen, mit dem Diisocyanat vorreagieren. Dann wird das nächste Polyol zugesetzt.

Vorzugsweise wird das erfindungsgemäße Polyurethan jedoch in einem einstufigen Verfahren hergestellt. Dabei werden zunächst alle Ausgangsstoffe in Gegenwart eines organischen Lösungsmittels bei einem Wassergehalt von weniger als 0,5 Gew.-% gemischt. Die Mischung wird auf 80 bis 200°C, insbesondere auf 100 bis 180 °C und vorzugsweise auf 130 bis 170°C ca. 1 bis 30 Stunden erhitzt. Die Reaktionszeit kann durch Anwesenheit von Katalysatoren verkürzt werden. Insbesondere sind tertiäre Amine brauchbar, z.B. Triethylamin, Dimethylbenzylamin, Bis-Dimethylaminoethylether und Bis-Methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1(3-Aminopropyl)imidazol, Pyrimidazol, 4-Dimethylamino-pyridin, 4-Pyrrolidinopyridin, 4-Morpholinopyridin, 4-Methylpyridin. Vorzugsweise wird jedoch ohne Katalysator gearbeitet. Auch das Lösungsmittel wird zweckmäßigerweise weggelassen. Darunter werden inerte organische flüssige Stoffe mit einem Siedepunkt unter 200°C bei Normaldruck verstanden.

Die erhaltenen erfindungsgemäßen Polyurethane sind bei Raumtemperatur fest und kristallin. Der Kristallisationsgrad schwankt in weiten Bereichen je nach den Ausgangsstoffen und den Kristallisationsbedingungen. Er liegt im allgemeinen bei 20 bis 80 %, insbesondere bei 30 bis 65 %, bezogen auf den Kristallisationsgrad, von käuflichem längerkettigem Polyethylenglykol speziell Polyethylenglykol 6 000 (gemessen mit DSC). Der Schmelzpunkt liegt bei ca. 60 bis 80°C.
Die erfindungsgemäßen Polyurethane sind in jedem Verhältnis mit Wasser mischbar.

Die erfindungsgemäßen Polyurethane eignen sich zur Stabilisierung zweiphasiger Systeme mit Wasser als kontinuierlicher Phase, bei der Suspensions- und Emulsions-Polymerisation. Sie eignen sich insbesondere als Stabilisator bei der Emulsions-Polymerisation von Vinylacetat und Vinylchlorid, sei es zur Herstellung von Homopolymerisaten oder von Copolymerisaten wie Ethylen-Vinylacetat-Copolymeren. Zweckmäßigerweise beträgt ihre Konzentration 2,5 bis 10 g/100 g Emulsion, insbesondere 3 bis 7 g/100 g.

Die erfindungsgemäßen Polyurethane eignen sich auch als Verdickungsmittel bzw. Quellmittel für wäßrige Systeme, da sie bereits in geringen Konzentrationen die Viskosität stark erhöhen. Bemerkenswert ist, daß die Verdikkerwirkung durch Elektrolyte kaum beeinflußt wird und durch Zusätze an nichtionischen Tensiden noch erheblich gesteigert werden kann. Für diesen Zweck eignen sich insbesondere Polyurethane, bei denen sich Y von Polypropylenglykol, Polytetrahydrofuran, 1,12-Dodecandiol, ableitet. Die Komponente c) sollte in einer Menge von 5 bis 25 Gew.-%, bezogen auf die Summe der Komponenten a) + c) in Polymeren vorliegen. Die bevorzugten Einsatzbereiche als Verdickungsmittel sind: Klebstoffdispersionen, Kosmetika, Handgeschirrspülmittel und Systeme im Bereich von Mining Oilfield.

Die für die Verdickung geeigneten nichtionischen Tenside können zugesetzt werden in Mengen von 1 bis 99, insbesondere 10 bis 80 und vorzugsweise 30 bis 70 Gew.-%, bezogen auf die Mischung aus Polyurethan und nichtionischem Tensid.

Unter nichtionischen Tensiden sind zu verstehen:
1. Partielle Ester von Polyalkoholen: z.B. Glyzerinmono- bzw. - distearate und -oleate, Sorbitmonostearat und - oleat.
2. Ethylenoxid- bzw. Propylenoxid-Addukte: z.B. mit Fettsäuren, Fettalkoholen, Fettaminen (diese Produkte können auch kationaktivische Eigenschaften haben), partiellen Fettsäureestern mehrwertiger Alkohole, meist des Glyzerins und des Sorbits, Alkylphenolen, Wasser (Polyalkylenglykols).
3. Amide höherer Fettsäuren: z.B. Stearinsäureethanolamid, allgemeine Fettsäureamide.
4. Lecithine.
5. Steroide: z.B. Cholesterin, Dihydrocholesterin, Hydroxycholesterin, Phytosterine, Zymosterin (Protegin, Eucerin, Amphocerin, Dehymuls u.a.).

Typische Beispiele für nichtionische Tenside sind Fettalkoholpolyglykolether, Alkylphenolpolyglykolether, Fettsäurepolyglykolester, Fettsäureamidpolyglykolether, Fettaminpolyglykolether, alkoxylierte Triglyceride, Alk(en)yloligoglykoside, Fettsäureglucamide, Polyolfettsäureester. Zuckerester, Sorbitanester und Polysorbate. Sofern die nichtionischen Tenside Polyglykoletherketten enthalten, können sie eine konventionelle, vorzugsweise jedoch eine eingeengte Homologenverteilung aufweisen. Besonders geeignet sind Ethoxylierungsprodukte von Fettsäuren oder Fettalkoholen der allgemeinen Formel 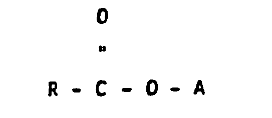 oder R - CH₂ - O - A.
R bedeutet einen linearen oder verzweigten Alkylrest, der gesättigt oder ungesättigt sein kann.
R kann aus 1 bis 43, vorzugsweise aus 6 bis 23, insbesondere 8 bis 23 besonders bevorzugt 12 bis 23 C-Atomen aufgebaut sein. Die Ethoxylierungsprodukte können auch aus Gemischen von Fettsäuren oder Fettalkoholen unterschiedlicher Alkylreste bestehen.
A in den oben erwähnten Formeln bedeutet eine Kette von 1 bis 200, vorzugsweise 3 bis 50, insbesondere 4 bis 30, Ethylenozideinheiten. Weiterhin können bis zu 80 Äquivalente, vorzugsweise bis zu 50 Äquivalente an Ethylenoxideinheiten durch Propylenoxideinheiten ersetzt sein. Die Endgruppe der Alkylenoxideinheiten kann aus einer Hydroxylfunktion bestehen. Wahlweise kann deren O-Atom jedoch auch mit Alkyl-, Alkenyl- oder Aralkylgruppen verethert sein.

Die Erfindung wird anhand folgender Beispiele im einzelnen erläutert:

### Beispiele

### A) Herstellung und Eigenschaften von wasserlöslichen hochmolekularen Polyurethanen

Beispiel 1+1a nicht erfindungsgemäß Beispiel 1

In einem 2l Dreihalskolben mit Rührer und N₂-Zuleitung wurden 1 500 g Polywachs 6000 (Polyethylenglykol Lipoxol - Fa. Hüls; 0,5 Äquivalent) 1 h bei 80°C und 1 mbar Unterdruck entwässert. Danach wurde mit N₂ belüftet, 67,2 g m-TMXDI (Fa. Cyanamid; 0,55 Äquivalent) zugegeben und bei 170°C in N-Atmosphäre N₂ gerührt. Nach 5 h betrug der NCO-Gehalt 0,06 %. Es wurde heiß abgefüllt.
Schmelzviskosität: 61 Pa•s (175°C, Epprecht)
Viskosität (40 %ige wäßrige Lösung): 17 000 mPa•s (Sp. 7, Brookfield),
spez. Viskosität (1%)ige wäßrige Lösung): 0,9 (Ostwald)

### Beispiel 1a

In einem 1 l Dreihalskolben mit Rührer und N₂-Zuleitung wurden 620 g Polywachs 6000 (Polyethylenglykol Lipoxol - Fa. Hüls; 1 Äquivalent) 1 h bei 80°C und 1 mbar Unterdruck entwässert. Danach wurde mit N₂ belüftet, 26,4 g m-TMXDI (Fa. Cyanamid; 1,08 Äquivalente) zugegeben und homogenisiert. Die Substanz wurde dann in eine Weißblechdose umgefüllt und bei 145°C getempert. Nach 2 h betrug der NCO-Gehalt 0,1 %. Es wurde heiß abgefüllt.
Schmelzviskosität: 105 Pas (175°C, Epprecht),
Viskosität (40 % wäßrige Lösung): 33 000 mPas,
spez. Viskosität (1 % wäßrige Lösung): 1,1 (Ostwald).

### Beispiel 2

Analog zu Beispiel 1 wurden in einem 500 ml Kolben 240 g Polywachs 6000 (0,08 Äquivalent) und 20 g Voranol P 2000 (Polypropylenglykol der Fa. Dow; 0,02 Äquivalent) entwässert. Zugabe von 12,46 g m-TMXDI (0,102 Äquivalent). Nach 5 h betrug der NCO-Gehalt 0,08 %.
Schmelzviskosität: 25 Pa•s (175 °C, Epprecht)
Viskosität (40 %ige wäßrige Lösung): 300 000 mPa•s (Sp. 7, Brookfield), spez. Viskosität (1 %ige wäßrige
Lösung): 0,8 (Ostwald).

### Beispiel 3

Analog zu Beispiel 1 wurden in einem 1 l Kolben

| | |
|---|---|
| 450 g | Polywachs 6000 (0,15 Äquivalent) und |
| 150 g | Voranol P 2000 (0,15 Äquivalent) entwässert. |

Zugabe von 37,4 g m-TMXDI (0,306 Äquivalent).
Nch 5 h betrug der NCO-Gehalt 0,12 %.
Schmelzviskosität: 6 bis 8 Pa•s (175 °C, Epprecht)
Viskosität (20 %ige wäßrige Lösung): 600 mPa•s (Sp. 7, Brookfield)
spez. Viskosität (1 %ige wäßrige Lösung): 0,6 (Ostwald).

### Beipsiel 4

Analog zu Beispiel 1 wurden in einem 500 ml Kolben

| | |
|---|---|
| 240 g | Polywachs 6000 (0,08 Äquivalent) u. |
| 20 g | PTHF 2000 (Polytetrahydrofuran der Fa. BASF; 0,02 Äquivalent) entwässert. |

Zugabe von 12,46 g m-TMXDI (0,102 Äquivalent).
Nach 5 h betrug der NCO-Gehalt 0,06 %.
Schmelzviskosität: 21 Pa•s (175 °C, Epprecht)
Viskosität (20 %ige wäßrige Lösung): 8 000 mPa•s (Sp. 7, Brookfield), spez. Viskosität (1 %ige wäßrige Lösung): 0,85 (Ostwald).

Beispiele 5+6 nicht erfindungsgemäß

### Beispiel 5

Analog zu Beispiel 1 wurden in einem 500 ml Kolben 300,4 g Polydiol 600 (Polyethylenglykol - Fa. Hüls; 0,88 Äquivalente entwässert. Zugabe von 108,9 g m-TMXDI (1,01 Äquivalent).
Nach 5 Stunden betrug der NCO-Gehalt o,14 %.
Schmelzviskosität: 0,4 Pa•s (175°C, Epprecht).
Viskosität (100 %ig): 600 000 mPa•s (Sp. 7, Brookfield), spez. Viskosität (1 %ige wäßrige Lösung, Ostwald): 0,2.

### Beispiel 6

Analog zu Beispiel 1 wurden in einem 500 ml Kolben 233,80 g Polywachs 12 000 (0,04 Äquivalent) entwässert. Zugabe von 5,1 g m-TMXDI (0,042 Äquivalent).
Nach 5 h betrug der NCO-Gehalt 0 %.
Schmelzviskosität: 20 Pa•s (175°C; Epprecht).
Viskosität (40 %ige wäßrige Lösung): 4 600 mPa•s (Sp.7, Brookfield), spez. Viskosität (1 %ige wäßrige Lösung Ostwald): 1,7.

### Beispiel 7

Analog zu Beispiel 1 wurden in einem 500 ml Kolben 300 g Polywachs 6 000 (0,1 Äquivalent) und 20,2 g 1,12-Dodecandiol (Fa. Fluka; 0,2 Äquivalent) entwässert. Zugabe von 37,9 g m-TMXDI (0,31 Äquivalent). Nach 5 Stunden betrug der NCO-Gehalt 0,12 %.
Schmelzviskosität: 40 Pa•s (175°C, Epprecht).
Viskosität (4 %ige wäßrige Lösung): 20 000 mPa•s (Brookfield, Sp. 7), spez. Viskosität (1 %ige wäßrige Lösung, Ostwald): 0,5.

### Beispiel 7a

Der Versuch wurde analog zu Beispiel 7 durchgeführt, wobei die Reaktionstemperatur bei 150°C lag.

Viskosität (4 %ige wäßrige Lösung): 5 200 mP•s (Brookfield, Sp. 7).

Beispiele 8 bis 11 nicht erfindungsgemäß

### Beispiel 8

Analog zu Beispiel 1 wurden in einem 500 ml Kolben 216 g PW 6000 (vorbehandelt mit Jonenaustauscher Lewatit SP 112 - Fa. Bayer; 0,073 Äquivalent) entwässert.
Zugabe von 9,8 m-TMXDI (0,08 Äquivalent).
Nach 24 Stunden betrug der NCO-Gehalt 0,1 %.
Schmelzviskosität: 2,4 Pa•s (175 °C, Epprecht).
Viskosität (40 %ige wäßrige Lösung): 800 mPa•s (Sp. 7; Brookfield), spez. Viskosität (1 %ige wäßrige Lösung; Ostwald): 0,5.

### Beispiel 9

Analog zu Beispiel 1 wurden in einem 500 ml Kolben 190,8 g PW 6000 (vorbehandelt mit Tonsil standard; 0,071 Äqu) entwässert.
Zugabe von 7,7 g Trimethylhexamethylendiisocyanat (Fa. Hüls; 0,074 Äquivalente).
Nach 4 Stunden betrug der NCO-Gehalt 0 %.
Schmelzviskosität: > 64 Pa•s (175°C, Epprecht).
Viskosität (20 %ige wäßrige Lösung): 3 000 mPa•s (Sp. 7, Brookfield), spez. Viskosität (1 %ige wäßrige Lösung; Ostwald): 2,2.

### Beispiel 10

Analog zu Beispiel 1 wurden in einem 500 ml Kolben 300 g PW 6000 (0,1 Aquivalent) und 18,35 g Hexadecandiol-1,2 (0,14 Äquivalent) entwässert.
Zugabe von 30,55 g m-TMXDI (0,25 Äquivalent).
Nach 4 Stunden betrug der NCO-Gehalt 0 %.
Schmelzviskosität: 1 Pa•s (175°C; Epprecht).
Viskosität (20 %ige wäßrige Lösung): 65 000 mPa•s (Sp. 7, Brookfield), spez. Viskosität (1 %ige wäßrige Lösung, Ostwald): 0,6.

### Beispiel 11

Analog zu Beispiel 1 wurden in einem 500 ml Kolben 133,55 g PW 6000 (vorbehandelt mit Tonsil standard; 0,05 Äquivalent) entwässert. Zugabe von 6,7 g m-TMXDI (0,055 Äquivalent).
Nach 6 Stunden betrug der NCO-Gehalt 0,2 %.
Zugabe von 0,7 g Diphenylmethandiamin (0,007 Äquivalent).
Nach 1 Stunde betrug der NCO-Gehalt 0 %.
Schmelzviskosität: 56 Pa•s (175°C; Epprecht).
Viskosität (20 %ige wäßrige Lösung): 400 mPa•s (Sp. 7, Brookfield), spez. Viskosität (1 %ige wäßrige Lösung, Ostwald): 1,1.

Bei den Beispielen 12 und 13 handelt es sich um PEG/PPG-Beispiele zum Beweis der Löslichkeitsgrenze von PPG (Beispiel 12 noch löslich, Beispiel 13 unlöslich in Wasser). Löslichkeitsgrenze ~ 60 % PEG, 40 % PPG.

### Beispiel 12

Analog zu Beispiel 1 wurden in einem 1 l Kolben 390 g Polywachs 6000 (0,13 Äquivalent) und 220 g Voranol P 2000 (0,22 Äquivalent) entwässert. Zugabe von 44,6 g m-TMXDI (0,365 Äquivalent).
Nach 5 Stunden betrug der NCO-Gehalt 0,2 %.
Schmelzviskosität < 1 Pa•s (175°C; Epprecht).
Viskosität (30 %ige wäßrige Lösung): 5 000 mPa•s (Sp. 7, Brookfield), spez. Viskosität (1 %ige wäßrige Lösung; Ostwald): 0,4.

### Beispiel 13

Analog zu Beispiel 1 wurden in einem 500 ml Kolben 150 g Polywachs 6000 (0,05 Äquivalent) und 130 g Voranol P 2000 (0,13 Äquivalent) entwässert. Zugabe von 22,85 g m-TMXDI (0,187 Äquivalent).
Nach 8 Stunden betrug der NCO-Gehalt 0,2 %.

Schmelzviskosität < 1 Pa•s (175 °C; Epprecht).

Beispiele 14 + 15 nicht erfindungsgemäß.

### Beispiel 14 (Einbau von Dimerdiol)

Analog zu Beispiel 1 wurden in eins 500 ml Kolben 300 g Polywachs 6000 (0,1 Äquivalent) und 18,9 g Dimerdiol (0,07 Äquivalent) entwässert. Zugabe von 22,0 g m-TMXDI (0,18 Äquivalent).
Nach 5 Stunden betrug der NCO-Gehalt 0,094 %.
Schmelzviskosität: 32 Pa•s (175 °C; Epprecht).
Viskosität (5 %ige wäßrige Lösung): 40 000 mPa•s (Sp. 7, Brookfield), spez. Viskosität (1 %ige wäßrige Lösung, Ostwald): 2,3.

### Beispiel 15

Analog zu Beispiel 1 wurden in einem 5 l Kolben 1772 g Polywachs 6000 (0,6 Äquiv.), 137 g 1,12-Octadecandiol (0,84 Äquiv.) entwässert.
Zugabe von 183 g m-TMXDI (1,5 Äquiv.).
In Abwandlung zu Beispiel 1 wurde die Reaktion bei einer Temperatur von 150 °C durchgeführt, Versuchsdauer 4,5 Std.,
Schmelzviskosität 27,5 Pas (175°C, Epprecht),
spez. Viskosität: 1,1,
Viskosität (3 %ige wäßrige Lösung): 16000 mPas. Beispiele B I. bis III. nicht erfindungsgemäß.

### B) Anwendung der Polyurethane

### I. Klebeeigenschaften von 40 %igen wäßrigen Lösungen

Geprüft wurde die Zugscherfestigkeit von Holz-Holz-Verklebungen nach DIN 53283:

| | |
|---|---|
| Beispiel 1 | 6,8 N/mm² |
| Beispiel 2 | 4,6 N/mm² |
| Beispiel 3 | 2,8 N/mm² |
| Beispiel 4 | 6,6 N/mm² |

### II. Klebeeigenschaften als Schmelzklebstoff

Geprüft wurde die Zugscherfestigkeit von Holz/Holz-Verklebungen nach DIN 53283:

| | |
|---|---|
| Beispiel 1 | 8,3 N/mm² |
| 2 | 5,3 N/mm² |
| 3 | 5,0 N/mm² |
| 4 | 7,8 N/mm² |
| 6 | 5,8 N/mm² |
| 7 | 7,5 N/mm² |
| 11b | 8,9 N/mm² |

### III. Klebeeigenschaften einer verdünnt wäßrigen Lösung (Tapetenkleister)

Eine 5 %ige Lösung (Beispiel 7; Viskosität: 25 000 mPa•s, Sp.7, Brookfield) wurde auf Papier aufgetragen und mit Gipskarton bzw. Gipsputz verklebt. Nach dem Trocknen war eine so feste Verbindung zwischen Papier und Untergrund gegeben, daß bei Schälversuchen Papierausriß auftrat.

### IV. Verwendung als Schutzkolloid

a) Homopolymerisation von Vinylacetat unter Verwendung des Polyurethans nach Beispiel 1 und des Emulgators Nonylphenol x 10 EO.
   In einem Reaktionsgefäß, das mit Rührer, Thermometer, zwei Zutropfgefäßen sowie einem Rückflußkühler versehen ist, wurden in 850 g entsalztem Wasser 10 g eines Umsetzungsproduktes von p-Alkylphenol (mit 6 bis 15 C-Atomen im Alkylrest) und 6,5 bis 30 Mol Ethylenoxid, 2 g Natriumhydrogencarbonat und 100 g eines Umsetzungsproduktes aus Polyethylenglykol und Isocyanat bei Temperaturen > 80 °C gelöst. Zu dieser Lösung wird bei 80°C eine Lösung aus 0,5 g Natriumformaldehydsulfoxylat in 50 g entsalztem Wasser gegeben. Im Zutropfgefäß A werden 887 g Vinylacetat Monomer bereitgestellt. Im Zutropfgefäß B werden eine Mischung aus 0,5 g t-Butylhydroperoxid und 100 g entsalzenem Wasser bereitgestellt.
   Bei Temperaturen zwischen 75 und 80°C wird mit der kontinuierlichen Dosierung aus den Zutropfgefäßen A und B begonnen. Nach Einsetzen der Polymerisation wird die kontinuierliche Dosierung aus A und B so gesteuert, daß sich eine Reaktionstemperatur von 80 bis 85°C einstellt. Die Reaktionsdauer beträgt ca. 3,5 bis 4 Stunden.
b) Copolymerdispersion unter Verwendung des Polyurethans nach Beispiel 1 und des Emulgators Nonylphenol x 10 EO.
   In einem Reaktionsgefäß (wie unter a beschrieben) werden in 849 g entsalztem Wasser 40 g eines Umsetzungsproduktes von p-Alkylphenol (mit 6 bis 15C-Atomen im Alkylrest) und 6,5 bis 30 Mol Ethylenoxid und 150 g eines Umetzungsproduktes aus Polyethylenglykol und Isocyanat bei Temperaturen > 80°C gelöst. Zu dieser Lösung wird bei 80°C eine Lösung aus 1,5 g Natriumformaldehydsulfoxylat in 50 g entsalztem Wasser gegeben. Im Zutropfgefäß A werden 539 g Vinylacetat Monomer und 270 g Maleinsäuredibutylester gemischt und bereitgestellt. Im Zutropfgefäß B werden eine Mischung aus 0,5 g t-Butylhydroperoxid und 100 g entsalztem Wassr bereitgestellt. Bei einer Temperatur zwischen 75 und 80°C wird mit den kontinuierlichen Dosierungen aus den Zutropfgefäßen A und B begonnen. Nach Einsetzen der Polymerisation wird die kontinuierliche Dosierung so gesteuert, daß sich eine Reaktionstemperatur von 80 bis 85°C einstellt. Die Reaktionsdauer beträgt ca. 3,5 bis 4 Stunden.

In beiden Fällen resultierten stabile koagulatfreie Dispersionen mit einer Teilchengröße von 660 nm. Die Dispersionen ergeben relativ weiche gut wasserfeste Filme.

### V. Verwendung als Verdickungsmittel

Die verdickende Wirkung der erfindungsgemäßen Polyurethane sowie das Zusammenwirken mit Salzen und mit nichtionischen Tensiden wird durch folgende Beispiele veranschaulicht.

**Tabelle 1: Verwendung der erfindungsgemäßen Polyurethane als Verdickungsmittel: Viskosität (Brookfield, 22 °C) in Pas als Funktion der Polymerkonzentration**

| Lfd. Nr. | Ausgangsprodukte für das PU | | | | Konzentration des PU In Wasser | | | | |
|---|---|---|---|---|---|---|---|---|---|
| | Polyethylenglykol | hydrophobes Diol | Isocyanat | Äquivalentsverhältnis | in Gew.-% | | | | |
| | | | | | 5 | 4 | 3 | 2 | 1 |
| 1 . | PEG 6000 | 1,12-C₁₂-Diol | TMXDI | 1 : 2 : 3,1 | | | | | |
| a) | ohne NaCL-Zusatz | | | | standfest | 24000 | 5000 | 200 | 100 |
| b) | mit 1 Gew.-% an NaCl | | | | standfest | 17000 | | 200 | |
| c) | mit 5 Gew.-% an NaCl | | | | standfest | 13000 | | 200 | |
| d) | mit 20 Gew.-% an NaCl | | | | standfest | 100 | | | |
| e) | ohne NaCl-Zusatz | | | | standfest | 52000 | 11000 | 300 | 200 |
| 2. | PEG 6000 | PPG 2000 | TMXDI | 0,5 : 0,5 : 1,02 | | | | | |
| a) | mit 5 Gew.-% an NaCl | | | | | 40000 | (auch nach 2 Wochen) | | |
| b) | mit 25 Gew.-% an NaCl | | | | | 2000 | | | |

| | | | | | | | | | |
|---|---|---|---|---|---|---|---|---|---|
| Fortsetzung Tabelle 1 siehe nächste Seite | | | | | | | | | |

**Fortsetzung Tabelle 1**

| Lfd. Nr. | Ausgangsprodukte für das PU | | | | Konzentration des PU in Wasser | | | | |
|---|---|---|---|---|---|---|---|---|---|
| | Polyethylenglykol | hydrophobes Diol | Isocyanat | Äquivalentsverhältnis | in Gew.-% | | | | |
| | | | | | 5 | 4 | 3 | 2 | 1 |
| 3. | PEG 6000 | PTHF 2000 | TMXDI | 0,7 0,3 : 1,02 | | | | | |
| a) | mit 5 Gew.-% an NaCl | | | | | 43000 | (35000 nach 2 Wochen) | | |
| b) | mit 20 Gew.-% an NaCl | | | | | 26000 | | | |
| 4. | PEG 6000 1,12-C₁₂-Diol | | TMXDI | 1 : 2,5 : 2,6 | | | | | |
| a) | ohne Tensid-Zusatz als 3%ige Lösung | | | | | | 800 | | |
| b) | mit Dehydol LT7 in Gewichtsverhältnis 7 : 3 (PU : Dehydol) | | | | | | 11000 | | |
| | als 3 %ige Lösung mit 2,1 Gew.-% an PU | | | | | | | | |
| c) | mit Dehydol LT7 in Gewichtsverhältnis 6 : 4 (PU : Dehydol) | | | | | | | | |
| | als 4 %ige Lösung mit 2,4 Gew.-% an PU | | | | | | 52000 | | |

- PPG: Polypropylenglykol,
- PTHF: Polytetrahydrofuran.
- Dehydol LT 7: Umsetzungsprodukt von 1 Mol C₁₂₋₁₈-Fettalkohol mit 7 Molen Ethylenoxid,
- Das Beispiel 1e) wurde im Unterschied zu den Beispielen 1a) bis 1d) bei 145 in 4 Stunden hergestellt.

## Patentansprüche

1. Verwendung eines hydrophilen hochmolekularen nichtionischen wasserlöslichen Polyurethans mit einer spezifischen Viskosität von mindestens 0,4 (1 %ige wässrige Lösung bei 20 °C) in einem wässrigen System als Stabilisator bei der Emulsionspolymerisation oder als Verdickungsmittel, wobei das Polyurethan die folgenden Struktureinheiten aufweist:
a) -O(-CH₂-CH₂-O)ₙ-,
wobei n = 8 bis 500 ist und wobei sich die Einheit -O(-CH₂-CH₂-O)ₙ₋ von als Diole eingesetzten Polyethyleglykolen ableitet,
b) -CO-NH-X-NH-CO-,
wobei sich die Gruppe -CO-NH-X-NH-CO- von einem Diisocyanat ableitet und X ein aliphatischer, alicyclischer oder aromatischer Rest ist, und
c) -O-Y-O-,
wobei sich die Gruppe -O-Y-O- von einem Diol ableitet, das ausgewählt ist aus:
c1) ethergruppenhaltigen hydrophoben Diolen mit Molgewichten von 250 bis 6000, ausgewählt aus: Polypropylenglykol, Polybutylenglykol, Polytetrahydrofuran, Polybutadiendiol,
c2) 1,10-Decandiol, 1,12-Dodecandiol, 2-Buten-1,4-diol, 2-Butin-1,4-diol, wobei c) von 2 bis 40 Gew.-%, bezogen auf a) + c) im Polyurethan ausmacht.

2. Verwendung nach Anspruch 1, **gekennzeichnet durch** eine Wasserlöslichkeit des Polyurethans in jedem Mischungsverhältnis bei 20 °C, insbesondere **durch** eine Wasserlöslichkeit von mindestens 70 Gew.-%, bezogen auf die Lösung.

3. Verwendung nach Anspruch 1 oder 2, **gekennzeichnet durch** ein Polyurethan mit einem Molekulargewicht, das **durch** eine spezifische Viskosität von 0,5 bis 6,0, insbesondere 0,7 bis 4,0, **gekennzeichnet** ist (1 %ige wässrige Lösung bei 20 °C).

4. Verwendung nach mindestens einem der Ansprüche 1, 2 oder 3, **gekennzeichnet durch** ein Polyurethan mit einer Schmelzviskosität von mehr als 3, vorzugsweise mehr als 5 und insbesondere mehr als 10 Pas bei 175 °C nach Epprecht.

5. Verwendung nach mindestens einem der Ansprüche 1 bis 4, **gekennzeichnet durch** ein Polyurethan mit einem Kristallisationsgrad von 20 bis 80, insbesondere von 30 bis 65 %, bezogen auf den Kristallisationsgrad von Polyethylenglykol, speziell käufliches Polyethylenglykol 6 000.

6. Verwendung nach mindestens einem der Ansprüche 1 bis 5 in Form einer wässrigen Lösung von 1 bis 40, insbesondere von 2 bis 30 Gew. -% des Polyurethans.

7. Verwendung des Polyurethans nach mindestens einem der Ansprüche 1 bis 6 als Stabilisator bei der Emulsionspolymerisation von Vinylacetat und Vinylchlorid sowie bei der Copolymerisation von Ethylen und Vinylacetat.

8. Verwendung des Polyurethans nach mindestens einem der Ansprüche 1 bis 6 als Verdickungsmittel für wässrige Systeme zusammen mit nichtionischen Tensiden.

9. Verwendung nach mindestens einem der Ansprüche 1 bis 8, **dadurch gekennzeichnet, dass** in des Struktureinheit a) n = 20 bis 300 ist.

10. Verwendung nach mindestens einem der Ansprüche 1 bis 9, **dadurch gekennzeichnet, dass** c) 5 bis 25 Gew.-%, bezogen auf a) +c) im Polyurethan ausmacht.

## Claims

1. Use of a hydrophilic high molecular weight non-ionic water-soluble polyurethane with a specific viscosity of at least 0.4 (1 % aqueous solution at 20°C) in an aqueous system, as a stabilizer for emulsion polymerization or as a thickener, wherein the polyurethane has the following structural units:
a) -O(-CH₂-CH₂-O)ₙ-,
wherein n = 8 to 500 and wherein the -O(-CH₂-CH₂-O)ₙ- unit derives from polyethylene glycols applied as diols,
b) -CO-NH-X-NH-CO-,
wherein the group -CO-NH-X-NH-CO- derives from a diisocyanate and X is an aliphatic, alicyclic or aromatic radical, and
c) -O-Y-O-
wherein the -O-Y-O- group derives from a diol, which is selected from:
c1) hydrophobic diols containing ether groups with molar weights from 250 to 6000, selected from: polypropylene glycol, polybutylene glycol, polytetrahydrofurane, polybutadiene-diol,
c2) 1,10-decanediol, 1,12-dodecanediol, 2-butene-1,4-diol, 2-butyne-1,4-diol,
wherein c) makes up from 2 to 40% by weight, based on a) + c) in the polyurethane.

2. The use according to claim 1, **characterized by** water-solubility of the polyurethane in each mixing ratio at 20°C, in particular by a water-solubility of at least 70% by weight, based on the solution.

3. The use according to claim 1 or 2, **characterized by** a polyurethane with a molecular weight, which is **characterized by** a specific viscosity from 0.5 to 6.0, in particular 0.7 to 4.0 (1 % aqueous solution at 20°C).

4. The use according to at least one of claims 1, 2 or 3, **characterized by** a polyurethane with a melt viscosity larger than 3, preferably larger than 5 and especially larger than 10 Pas at 175°C according to Epprecht.

5. The use according to at least one of claims 1 to 4, **characterized by** a polyurethane with a crystallization degree from 20 to 80, in particular from 30 to 65%, based on the crystallization degree of polyethylene glycol, especially purchasable polyethylene glycol 6000.

6. The use according to at least one of claims 1 to 5, in the form of an aqueous solution of 1 to 40, in particular of 2 to 30% by weight of the polyurethane.

7. The use of the polyurethane according to at least one of claims 1 to 6, as a stabilizer, in emulsion polymerization of vinyl acetate and vinyl chloride as well as in copolymerization of ethylene and vinyl acetate.

8. The use of the polyurethane according to at least one of claims 1 to 6. as a thickener for aqueous systems together with non-ionic surfactants.

9. The use according to at least one of claims 1 to 8, **characterized in that** n = 20 to 300 in the structural unit a).

10. The use according to at least one of claims 1 to 9, **characterized in that** c) makes up 5 to 25% by weight, based on a) + c) in the polyurethane.

## Revendications

1. Utilisation d'un polyuréthane hydrophile, à poids moléculaire élevé, non ionique, soluble dans l'eau possédant une viscosité spécifique d'au moins 0,4 (solution aqueuse à 1 % à 20 °C) dans un système aqueux, comme stabilisateur lors de la polymérisation en émulsion ou comme épaississant, le polyuréthane présentant les unités de structure suivantes :
a) -O(CH₂-CH₂-O)ₙ-,
où n = 8 à 500 et l'unité -O(CH₂-CH₂-O)ₙ- dérivant de polyéthylèneglycols mis en oeuvre à titre de diols ;
b) -CO-NH-X-NH-CO-,
le groupe -CO-NH-X-NH-CO- dérivant d'un diisocyanate et X représentant un radical aliphatique, alicyclique ou aromatique, et
c) -O-Y-O-,
le groupe -O-Y-O- dérivant d'un diol qui est choisi parmi :
c1) des diols hydrophobes contenant des groupes éthers, possédant des poids molaires de 250 à 6000, choisis parmi : le polypropylèneglycol, le polybutylèneglycol, le polytétrahydrofuranne, le polybutadiènediol,
c2) le 1,10-décanediol, le 1,12-dodécanediol, le 2-butène-1,4-diol, le 2-butyne-1,4-diol,
c) représentant de 2 à 40 % en poids, rapportés à a) + c), dans le polyuréthane.

2. Utilisation selon la revendication 1, **caractérisée par** une solubilité dans l'eau du polyuréthane dans chaque proportion à 20 °C, en particulier par une solubilité dans l'eau d'au moins 70 % en poids, rapportés à la solution.

3. Utilisation selon la revendication 1 ou 2, **caractérisée par** un polyuréthane possédant un poids moléculaire qui se **caractérise par** une viscosité spécifique de 0,5 à 6,0, en particulier de ,0,7 à 4,0 (solution aqueuse à 1 % à 20°C).

4. Utilisation selon au moins une des revendications 1, 2 ou 3, **caractérisée par** un polyuréthane possédant une viscosité en fusion supérieure à 3, de préférence supérieure à 5 et en particulier supérieure à 10 Pa.s à 175 °C selon Epprecht.

5. Utilisation selon au moins une des revendications 1 à 4, **caractérisée par** un polyuréthane possédant un degré de cristallisation de 20 à 80, en particulier de 30 à 65 %, rapporté au degré de cristallisation du polyéthylèneglycol, de manière spécifique au polyéthylèneglycol 6000 disponible dans le commerce.

6. Utilisation selon au moins une des revendications 1 à 5, sous la forme d'une solution aqueuse de 1 à 40, en particulier de 2 à 30 % en poids du polyuréthane.

7. Utilisation du polyuréthane selon au moins une des revendications 1 à 6, comme stabilisateur lors de la polymérisation en émulsion d'acétate de vinyle et de chlorure de vinyle, ainsi que lors de la copolymérisation d'éthylène et d'acétate de vinyle.

8. Utilisation du polyuréthane selon au moins une des revendications 1 à 6, comme épaississant pour des systèmes aqueux, de manière conjointe avec des agents tensioactifs non ioniques.

9. Utilisation selon au moins une des revendications 1 à 8, **caractérisée en ce que**, dans l'unité de structure a), n est égal à 20 - 300.

10. Utilisation selon au moins une des revendications 1 à 9, **caractérisée en ce que** c) représente de 5 à 25 % en poids, rapportés à a) + c), dans le polyuréthane.
